# EUROPÄISCHE PATENTSCHRIFT

(11) **EP 3 028 934 B1**
(45) Veröffentlichungstag und Bekanntmachung des Hinweises auf die Patenterteilung: **14.03.2018**
(21) Anmeldenummer: 15187242.1
(22) Anmeldetag: 29.09.2015
(51) Int. Cl.: B62M 6/20, F16H 9/24, B62M 23/00, B62M 23/02

(54) **ANTRIEBSEINRICHTUNG FÜR EIN MIT MOTORKRAFT UND/ODER PEDALKRAFT BETREIBBARES FAHRZEUG**
DRIVE DEVICE FOR A VEHICLE DRIVEN WITH THE AID OF THE ENGINE AND/OR PEDAL POWER
DISPOSITIF D'ENTRAINEMENT POUR UN VEHICULE ENTRAINE PAR LA FORCE MOTRICE ET/OU LA FORCE DE PEDALAGE

(30) Priorität: 03.12.2014 DE 102014224698
(43) Veröffentlichungstag der Anmeldung: 08.06.2016
(73) Patentinhaber: Robert Bosch GmbH, 70442 Stuttgart (DE)
(72) Erfinder: Hilzinger, Juergen, 71272 Renningen (DE); Kimmich, Peter, 71144 Steinenbronn (DE); Hinterkausen, Markus, 71701 Schwieberdingen (DE); Greiner, Rinaldo, 72762 Reutlingen (DE)

(56) Entgegenhaltungen:
- EP-A2- 1 630 092
- WO-A1-00/75005
- WO-A1-2006/087750
- US-A1- 2006 063 624

## Beschreibung

### Stand der Technik

Die vorliegende Erfindung betrifft eine Antriebsvorrichtung für einen mit Motorkraft und/oder Pedalkraft betreibbares Fahrzeug mit einer Kurbelwelle für Tretkurbeln, insbesondere ein Elektrofahrrad. Die Antriebseinrichtung umfasst einen Elektromotor, einen mit dem Elektromotor und/oder mit der Kurbelwelle zur Kraftübertragung jeweils verbundenes oder verbindbares Kettengetriebe mit einstellbarer Übersetzung, wobei das Kettengetriebe mehrere beabstandete Kettenräder aufweist, die mittels wenigstens einer Kette miteinander drehverbunden sind, wobei ein Kraftfluss durch das Kettengetriebe für verschiedene Übersetzungen über jeweils ein anderes Kettenradpaar geleitet wird. Weiter umfasst die Antriebseinrichtung ein Getriebeabtriebsrad, das mit dem Kettengetriebe zur Kraftübertragung verbunden oder verbindbar ist. Weiter umfasst die Erfindung ein mit Motorkraft und/oder Pedalkraft betreibbares Fahrzeug. Insbesondere betrifft die Erfindung ein Elektrofahrrad.

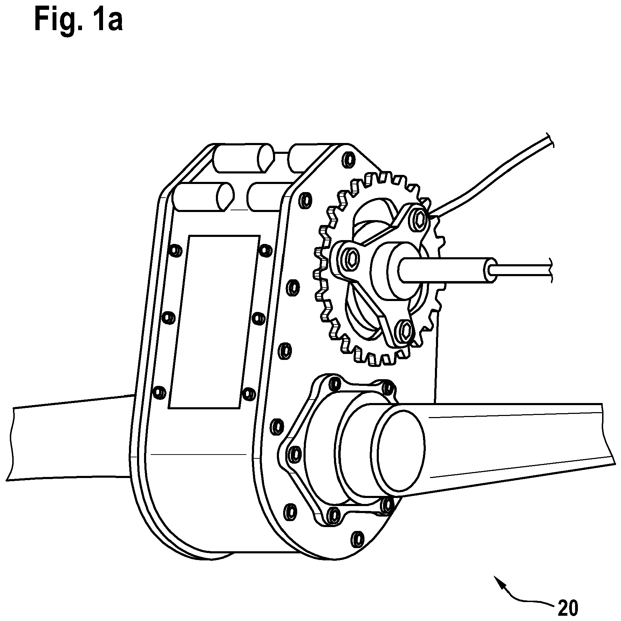

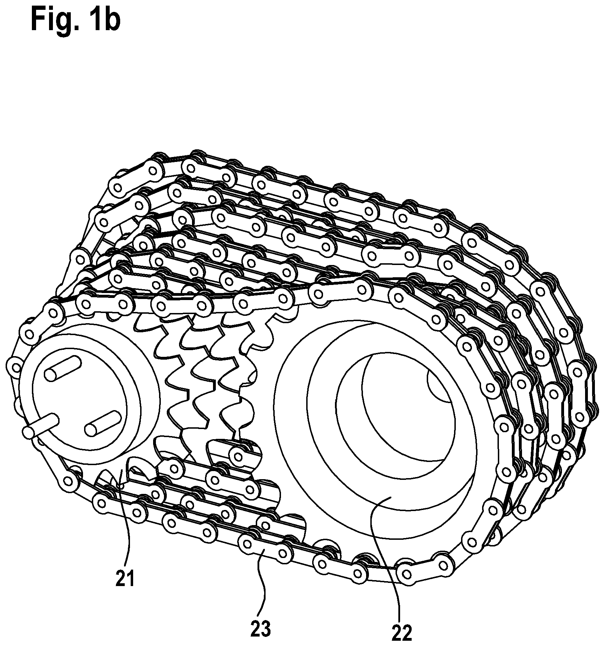

Im Stand der Technik sind mit Motorkraft und/oder Pedalkraft betreibbare Fahrzeuge mit einem Kettengetriebe bekannt. Bekannte Fahrzeuge dieser Art sind E-Bikes und Pedelecs mit einer konventionellen Kettenschaltung mit Umwerfer am Hinterrad. Darüber hinaus ist im Stand der Technik vorgeschlagen worden, ein Kettengetriebe für einen Mittelantrieb zu realisieren, bei dem eine mit Tretkurbeln versehene Kurbelwelle mit einem Satz von Kettenrädern verbindbar ist, welche ihrerseits jeweils mittels einer Kette mit einem weiteren Kettenrad verbunden sind. Ein Kettengetriebe 20 für ein pedalantreibbares Fahrzeug ist in den Figuren 1 a und 1b als Stand der Technik dargestellt. Aufgrund unterschiedlicher Größen der durch ihre jeweilige Kette 23 miteinander verbundenen Kettenräder 21, 22 werden verschiedene Übersetzungen realisiert. Jeweils ein Kettenradpaar mit einem Antriebskettenrad und einem Abtriebskettenrad sowie dazugehöriger Kette kann den Kraftfluss durch das Kettengetriebe bewirken, wenn sowohl das Antriebskettenrad als auch das Abtriebskettenrad drehfest mit ihrer jeweiligen Welle verbunden sind. Dazu ist ein geeigneter Kuppelmechanismus für die am Schaltvorgang beteiligten Kettenräder vorgesehen.

Ein Nachteil dieses Standes der Technik ist, dass der Aufbau viel Bauvolumen erfordert. Der wenig kompakte Aufbau bringt außerdem ein relativ großes Gehäuse mit sich, welches auch Nachteile hinsichtlich des Gewichts des Getriebes hat.

In den Schriften WO 2006/087750 A1 und WO 00/75005 A1 ist jeweils eine Getriebeeinheit beschrieben. Dokument US2006/0063624 A1 offenbart die Präambel des Anspruchs 1.

### Offenbarung der Erfindung

Um die vorgenannten Nachteile auszuräumen wird erfindungsgemäß vorgeschla-gen, dass die Kurbelwelle durch das Innere des Getriebeabtriebsrades verläuft, wobei das Getriebeabtriebsrad und die Kurbelwelle gegeneinander verdrehbar sind. Bevorzugt ist das Getriebeabtriebsrad auf der Kurbelwelle gelagert. Der im Oberbegriff genannte Begriff eines Kettenradpaares bedeutet nicht unbedingt eine feste Zuordnung von zwei Kettenrädern zueinander. Ein anderes Kettenradpaar kann daher bedeuten, dass ein anderes Kettenradpaar dieselbe Kette wie ein ur-sprüngliches Kettenradpaar verwendet, welche jedoch auf anderen Kettenrädern als bei dem ursprünglichen Kettenradpaar läuft. Dennoch ist auch eine feste Zu-ordnung von Antriebskettenrädern und Abtriebskettenrädern über eine jeweilige Kette denkbar, wobei sich mehrere solcher Kettenradpaare in ihrer Übersetzung und in der Größe der jeweiligen Antriebs- und/oder Abtriebskettenräder unter-scheiden können. Das Getriebeabtriebsrad ist ein Kettenrad. Der Begriff Kettenrad soll in dieser Anmeldung auch ein Ritzel und somit auch ein besonders kleines Ketten-rad umfassen. Durch die Anordnung der Kurbelwelle durch das Getriebeabtriebs-rad hindurch wird der Vorteil eines kompakteren Aufbaus der Antriebseinrichtung realisiert. Ein weiterer Vorteil ist, dass das Getriebeabtriebsrad in beliebiger Größe vorgesehen werden kann, ohne dass es zu einer Kollision mit der Kurbelwelle, den Tretkurbeln oder den Pedalen kommen kann.

Die Unteransprüche zeigen bevorzugte Weiterbildungen der Erfindung.

In der erfindungsgemäßen Ausführungsform ist die Kurbelwelle in einer Aussparung in einem oder mehreren Antriebskettenrädern des Kettengetriebes angeordnet. Die Kettenräder sind jeweils entweder verdrehfest mit der Kurbelwelle verbunden oder mittels einer schaltbaren Kupplung mit der Kurbelwelle drehfest verbindbar. Die drehfeste Verbindbarkeit bedeutet zugleich, dass es Betriebszustände geben kann, in denen ein Kettenrad drehfeste Verbindung mit der Kurbelwelle hat. Durch das Herstellen und Lösen der drehfesten Verbindung eines Antriebskettenrades mit der Kurbelwelle kann ein Schaltvorgang bewirkt werden, der bevorzugt mit einer Änderung der Übersetzung des Kettengetriebes einhergeht.

In der erfindungsgemäßen Ausführungsform sind ein oder mehrere Abtriebskettenräder des Kettengetriebes auf einer Zwischenwelle angeordnet. Die Zwischenwelle ist nicht konzentrisch zu der Kurbelwelle angeordnet, sondern verläuft in einem Abstand zu dieser. Da die Zwischenwelle die Abtriebskettenräder trägt, definiert dieser Abstand in Verbindung mit der vorstehend zuletzt beschriebenen Ausführungsform den Abstand der Antriebs- und Abtriebskettenräder und somit die Kettenlänge. Die Abtriebskettenräder sind jeweils mit der Zwischenwelle drehfest verbunden oder mittels einer schaltbaren Kupplung mit dieser verbindbar. Ebenso wie in Bezug auf die Kurbelwelle und die Antriebskettenräder ist es denkbar, durch das Herstellen und Lösen der Verbindung zwischen der Zwischenwelle und den Abtriebskettenrädern einen Schaltvorgang auszuführen bzw. die Übersetzung des Kettengetriebes zu ändern.

In der erfindungsgemäßen Ausführungsform ist das Getriebeabtriebsrad mit einem oder mehreren Abtriebskettenrädern drehgekoppelt. Alternativ kann das Getriebeabtriebsrad auch mit einem oder wahlweise mit einem von mehreren Abtriebskettenrädern drehverbindbar sein, wozu in dem Kraftfluss zwischen dem Getriebeabtriebsrad und den Abtriebskettenrädern eine schaltbare Kupplung vorgesehen sein kann. Insbesondere kann je eine Kupplung zwischen der Zwischenwelle und jedem Abtriebskettenrad angeordnet sein. Mit den Kupplungen kann die Übersetzung des Kettengetriebes geändert werden.

In der erfindungsgemäßen Ausführungsform wird vorgeschlagen, dass das Getriebeabtriebsrad mit der Zwischenwelle drehverbunden ist. Dafür kann eine separate Getriebestufe vorgesehen sein. Diese Getriebestufe ist zum Beispiel als Radpaar, insbesondere als Zahnradpaar oder auch als Reibradpaar, denkbar. Besonders bevorzugt wird der Einsatz eines Stirnradpaares. Alternativ kann auch ein Zugmittelgetriebe eingesetzt werden, nämlich insbesondere ein Kettentrieboder Zahnriementrieb. Die beiden alternativ vorgeschlagenen Lösungen unter-scheiden sich dadurch, dass eine Getriebestufe mit einem Radpaar eine Drehrichtungsumkehr zwischen dem Getriebeabtriebsrad und der Zwischenwelle bewirkt, während ein Zugmittelgetriebe dies bei nicht überkreuzendem Zugmittel nicht bewirkt. Das Getriebeabtriebsrad kann auf der Kurbelwelle drehbar gelagert sein. Der Begriff "drehverbunden" bedeutet, dass die drehverbundenen Teile gekoppelt drehbar sind. Eine solche Drehung geht mit einer gleichzeitigen Drehbewegung der drehverbundenen Teile einher.

In einer weiteren nicht beanspruchten Ausführungsform sind mindestens zwei Kettenradpaare mit jeweils einer eigenen Kette vorgesehen. Ein Kraftfluss zwischen der Kurbelwelle und dem Getriebeabtriebsrad kann zur Einstellung einer bestimmten Übersetzung wahlweise über ein der Übersetzung zugeordnetes Kettenradpaar verlaufen. Um eine Übersetzung einzustellen, wird das Antriebskettenrad des Kettenradpaares mit der gewünschten Übersetzung mit der Kurbelwelle verbunden oder ist ohnehin damit drehfest verbunden, und/oder es wird das Abtriebskettenrad mit der Zwischenwelle drehfest verbunden, wenn dieses nicht ohnehin schon drehfest mit der Zwischenwelle verbunden ist. Für die optionalen Verbindungen zwischen Antriebskettenrad und Kurbelwelle sowie zwischen dem Abtriebskettenrad und der Zwischenwelle kann jeweils eine Kupplung geschlossen werden. Wenn der Kraftfluss über ein bestimmtes Kettenradpaar geleitet wird, sind Kettenradpaare mit anderer Übersetzung an ihrem Antriebskettenrad oder an ihrem Abtriebskettenrad oder an beiden gegenüber ihrer jeweiligen Welle drehbar, sodass über das entsprechende Zahnradpaar durch das Kettengetriebe kein Kraftfluss übertragen werden kann. Durch die gleichzeitige Verwendung verschiedener parallel zueinander geschalteter Übersetzungsstufen würde das Kettengetriebe blockieren. Vorzugsweise ist die Paarung der Kettenräder in jedem Kettenradpaar verschieden von der Paarung der Kettenräder in jedem anderen Kettenradpaar.

In einer nicht beanspruchten Ausführungsform ist eine schaltbare Kupplung zwischen einem Abtriebskettenrad und der Zwischenwelle und/oder zwischen einem Antriebskettenrad und der Kurbelwelle als Ziehkeilgetriebe ausgeführt. Durch eine Stellung des Ziehkeils an der Position eines Kettenrades kann dieses drehfest mit seiner Welle verbunden sein, während die anderen Kettenräder gegenüber ihrer Welle verdrehbar sind.

Ein Vorteil der vorstehend beschriebenen Ausführungsformen der Erfindung ist es, dass sich das Getriebe im Stand schalten lässt. Dies ist insbesondere für das Anfahren aus dem Stand ein Vorteil. Durch automatisiertes Schalten können ein Antrieb und Schaltung optimal aufeinander abgestimmt werden.

In der erfindungsgemäßen Ausführungsform umfasst das Kettengetriebe eine Kette, mit welcher verschiedene Kettenräder, von denen sich eins auf der Kurbelwelle und eins auf der Zwischenwelle befindet, verbindbar sind. Durch unterschiedliche Größen der verbundenen Kettenräder und Umwerfen der Kette kann eine Übersetzung des Kettengetriebes eingestellt werden. Die Kette kann ein ausgewähltes aus mehreren Antriebskettenrädern mit einem Abtriebskettenrad, ein Antriebskettenrad mit einem ausgewählten, aus mehreren Abtriebskettenrädern, oder ein ausgewähltes, aus mehreren Antriebskettenrädern mit einem ausgewählten aus mehreren Abtriebskettenrädern verbinden. Vorzugsweise sind die Antriebskettenräder drehfest mit der Kurbelwelle verbunden und bevorzugt sind die Abtriebskettenräder drehfest mit der Zwischenwelle verbunden. Vorzugsweise umfasst die einstellbare Stufe des Kettengetriebes nur eine einzige Kette. Im Sinne der Definition in dieser Anmeldung bilden die jeweils mit der Kette verbundenen Kettenräder ein Kettenradpaar.

In der erfindungsgemäßen Ausführungsform kann die Kette mittels einer Umwerfereinrichtung auf verschiedene Antriebskettenräder und/oder verschiedene Abtriebskettenräder umgeworfen werden. Die Umwerfereinrichtung ist dazu bevorzugt in Längsrichtung der Zwischenwelle oder der Kurbelwelle verschieblich. Die Umwerfereinrichtung wirkt bevorzugt auf die Kette an einer Stelle ein, die nicht auf dem Antriebskettenrad und nicht auf dem Abtriebskettenrad liegt, welche die Kette verbindet. Bevorzugt ist die Umwerfereinrichtung auf der Zwischenwelle geführt. Ein Vorteil einer solchen Umwerfereinrichtung ist, dass das Kettengetriebe damit unter Last schaltbar ist. Durch automatisiertes Schalten können ein Antrieb und Schaltung optimal aufeinander abgestimmt werden.

In einer weiteren Ausführungsform ist der Motor des Fahrzeugs als Elektromotor ausgebildet und mit einem Drehzahlreduziergetriebe verbunden. Die Leistung des Elektromotors kann über das Drehzahlreduziergetriebe in die Kurbelwelle eingebracht werden. Vorzugsweise ist dazu die Kurbelwelle mit einer Freilaufkupplung mit dem Abtrieb des Drehzahlreduziergetriebes verbunden. Vorzugsweise ist der Abtrieb des Drehzahlreduziergetriebes als ein Rad ausgebildet, welches die Kurbelwelle umgibt. Zwischen der Kurbelwelle und diesem Rad ist die Freilaufkupplung bevorzugt angeordnet.

In einem weiteren Aspekt der Erfindung wird ein mit Motorkraft und/oder Pedalkraft betreibbares Fahrzeug vorgeschlagen, welches eine Antriebseinrichtung gemäß einer der vorstehend beschriebenen Ausführungsformen aufweist.

### Kurze Beschreibung der Zeichnungen

Nachfolgend werden Ausführungsbeispiele der Erfindung unter Bezugnahme auf die begleitenden Zeichnungen im Detail beschrieben. In der Zeichnung ist:
- Figur 1a: eine perspektivische Darstellung einer Antriebseinheit für ein pedalgetriebenes Fahrzeug mit einem Kettenradgetriebe nach dem Stand der Technik;
- Figur 1b: eine perspektivische Darstellung eines innenliegenden Teils des Kettenradgetriebes aus der Figur 1 a ohne Gehäuse;
- Figur 2: eine schematische Darstellung einer nicht beanspruchten Ausführungsform der Antriebseinrichtung;
- Figur 3: eine schematische Darstellung der erfindungegemäßen Ausführungsform der erfindungsgemäßen Antriebseinrichtung, und
- Figur 4: eine schematische Darstellung eines Elektrofahrrades, welches die erfindungsgemäße Antriebseinheit umfasst.

### Ausführungsformen der Erfindung

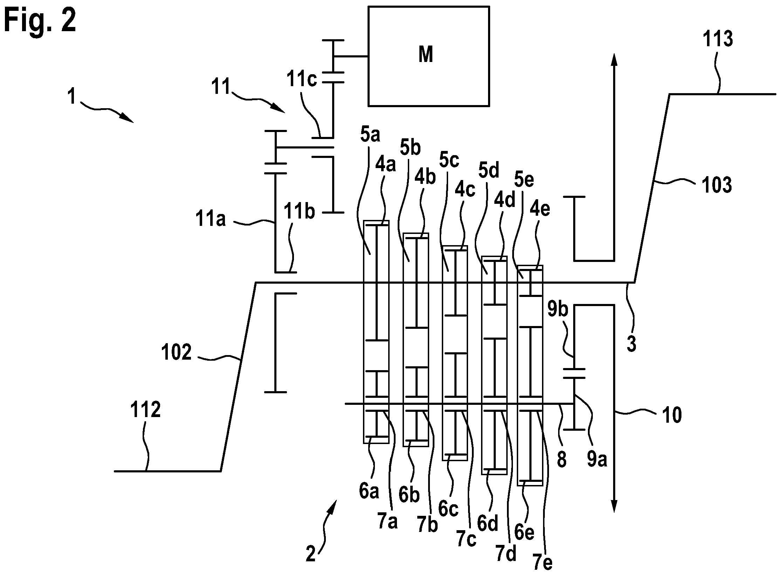

Figur 2 zeigt eine erste Ausführungsform der Antriebseinrichtung 1. Die Antriebseinrichtung 1 umfasst ein Kettengetriebe 2 und eine Kurbelwelle 3, an welcher Pedalarme 102 und 103 befestigt sind. An ihren Enden tragen die Pedalarme jeweils ein Pedal 112 bzw. 113. An der Kurbelwelle 3 sind verdrehfest Kettenräder 4a, 4b, 4c, 4d und 4e befestigt. Die Kettenräder 4a - 4e sind über Ketten 5a - 5e mit Abtriebskettenrädern 6a - 6e verbunden. Die Abtriebskettenräder 6a - 6e sind jeweils über eine nicht explizit dargestellte schaltbare Kupplung 7a - 7e mit einer Zwischenwelle 8 verbindbar. Die Zwischenwelle 8 ist über ein Stirnradgetriebe mit Zahnrädern 9a und 9b mit einem Getriebeabtriebsrad 10 verbunden.

Durch die unterschiedlichen Größen der angeordneten Antriebskettenräder 4a - 4e und Abtriebskettenräder 6a - 6e ergeben sich fünf verschiedene mögliche Übersetzungen des Kettengetriebes 2. Eine Übersetzung kann ausgewählt werden, indem diejenige Kupplung 7a - 7e geschlossen wird, die zu dem Kettenradpaar gehört, welches die gewünschte Übersetzung liefert. In diesem Fall kann Kraft von den Pedalen 112, 113 über die Tretkurbeln 102, 103 in die Kurbelwelle 3 eingeleitet werden, welche das so entstehende Drehmoment an die Antriebskettenräder 4a - 4e weiterleitet. Dadurch, dass nur eine der Verbindungskupplungen 5a - 5e geschlossen ist, kann das Drehmoment aus der Kurbelwelle 3 nur über das Kettenradpaar 4a, 6a oder 4b, 6b oder 4c,6c oder 4d, 6d oder 4e, 6e geleitet werden, an dessen Abtriebsrad 6a - 6e die Kupplung 7a - 7e geschlossen ist. Über diese Kupplung 7a - 7e wird das Drehmoment in die Zwischenwelle 8 übertragen, welche es an das Antriebsstirnrad 9a des Stirnradsatzes 9a, 9b weitergibt. Das Abtriebsstirnrad 9b ist verdrehfest mit dem Getriebeabtriebsrad 10 verbunden. Das Stirnrad 9b wird von dem Stirnrad 9a angetrieben und treibt selbst das Getriebeabtriebsrad 10 an. Durch das Getriebeabtriebsrad 10 verläuft die Kurbelwelle, wodurch die Antriebseinrichtung 1 kompakt ausgeführt werden kann. Das Getriebeabtriebsrad 10 sowie das damit drehfest verbundene Abtriebsstirnrad 9 b sind auf der Kurbelwelle 3 drehbar gelagert. Es ist somit ein Pedalieren mit einer Drehzahl denkbar, die höher oder niedriger als die Drehzahl des Getriebeabtriebsrads 10 ist.

Die Antriebseinrichtung 1 weist weiter einen Elektromotor M auf, welcher mit einem Drehzahlreduziergetriebe 11 verbunden ist. Das Drehzahlreduziergetriebe 11 ist bevorzugt zweistufig ausgeführt. Vorzugsweise ist es mit 2 Stirnradsätzen aufgebaut. Durch das Abtriebsstirnrad 11a verläuft die Kurbelwelle 3. Zwischen dem Abtriebsstirnrad 11a und der Kurbelwelle 3 ist eine Freilaufkupplung 11b angeordnet, welche in einer Drehrichtung ermöglicht, dass das Abtriebsstirnrad 11a und die Kurbelwelle 3 unterschiedliche Drehzahlen aufweisen. Auf diese Weise wird beispielsweise ein Rückwärtspedalieren ermöglicht, ohne dass der Elektromotor M dabei mitläuft. Vorzugsweise ist in dem Drehzahlreduziergetriebe 11 ein weiterer Freilauf 11c zwischen den Stufen des Drehzahlreduziergetriebes 11 angeordnet.

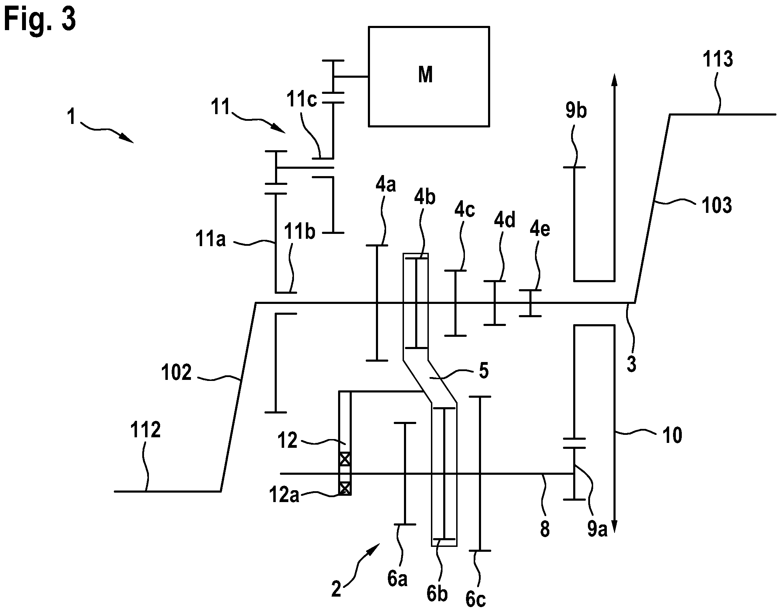

Figur 3 zeigt die erfindungsgemäße Ausführungsform der Antriebseinheit 1. Diese Antriebseinheit 1 hat sehr viele Elemente und Merkmale mit der zuvor in Bezug auf Figur 2 beschriebenen Ausführungsform gemeinsam, welche mit identischen Bezugsziffern bezeichnet sind. Im Weiteren wird nur auf die Unterschiede zwischen den Ausführungsformen der Figuren 2 und 3 eingegangen. Für die übrigen Merkmale sei auf die Beschreibung der Figur 2 verwiesen.

Im Unterschied zu der Ausführungsform der Figur 2 weist die Ausführungsform der Figur 3 nur eine Kette 5 auf. Mit dieser Kette 5 ist jeweils ein Antriebskettenrad 4a bis 4e mit einem der Abtriebskettenräder 6a - 6c verbindbar. Durch die Auswahl der verbundenen Antriebskettenräder 4a - 4e bzw. Abtriebskettenräder 6a - 6c kann eine Übersetzung des Kettengetriebes 2 gewählt werden. Zur Einstellung der Übersetzung ist eine Umwerfeeinrichtung 12 vorgesehen, welche auf die Kette 5 in einem Kettenabschnitt zwischen einem der Antriebskettenräder 4a - 4e und einem der Abtriebskettenräder 6a - 6c einwirkt. Vorzugsweise berührt der Kettenabschnitt 5 keines der Antriebskettenräder 4a - 4e oder der Abriebskettenräder 6a - 6c. Die Umwerfereinrichtung 12 ist in Längsrichtung der Zwischenwelle 8 verschieblich angeordnet. Ein Schiebelager 12a der Umwerfereinrichtung 12 läuft wie dargestellt bevorzugt auf der Zwischenwelle 8.

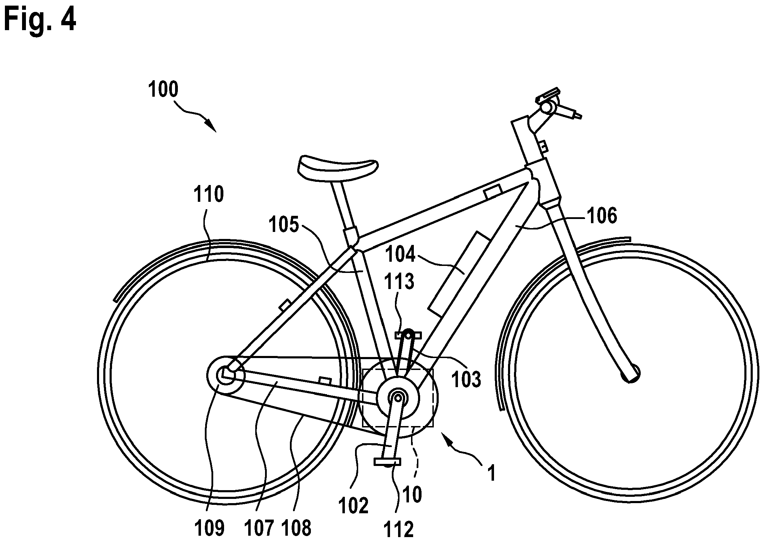

In der Figur 4 ist ein Elektrofahrrad 100 dargestellt, welches eine Antriebseinrichtung 1 nach der Erfindung auf weist. Die Antriebseinrichtung 1 ist zentral in dem Elektrofahrrad 100 eingebaut. Die Antriebseinheit 1 umfasst auch die Tretlager für den Kurbeltrieb aus Kurbelwelle und den Pedalarmen 102, 103 sowie den Pedalen 112, 113. Das Getriebeabtriebsrad 10 ist als Kettenrad ausgeführt, welches über eine Sekundärkette 108 mit einem Ritzel 109 an einem Hinterrad 110 auf herkömmliche Weise verbunden ist. Zur Versorgung des Elektromotors der Antriebseinrichtung 1 umfasst das Elektrofahrrad 100 eine Batterie 104, die bevorzugt aufladbar ist. An der Antriebseinrichtung 1 können ein Sattelrohr 105 und ein Unterrohr 104 befestigt sein. Dabei müssen das Sattelrohr 105 und das Unterrohr 106 nicht unmittelbar miteinander verbunden sein.

## Patentansprüche

1. Antriebseinrichtung (1) für ein mit Motorkraft und/oder Pedalkraft betreibbares Fahrzeug (100) mit einer Kurbelwelle (3) für Tretkurbeln (102, 103) und einer Zwischenwelle (8), insbesondere für ein Elektrofahrrad, umfassend
• einen Elektromotor (M),
• ein mit dem Elektromotor (M) und/oder mit der Kurbelwelle (3) zur Kraftübertragung jeweils verbundenes oder verbindbares Kettengetriebe (2) mit einstellbarer Übersetzung, wobei das Kettengetriebe (2) mehrere beabstandete Kettenräder (4a - 4e, 6a - 6e) aufweist, die mittels einer Kette (5,) miteinander drehverbindbar sind, wobei ein Kraftfluss durch das Kettengetriebe (2) für verschiedene Übersetzungen über jeweils ein anderes Kettenradpaar geleitet wird,
• die Kurbelwelle (3) durch ein oder mehrere Antriebskettenräder (4a - 4e) des Kettengetriebes (2) verläuft, wobei das oder die Antriebskettenräder (4a - 4e) mit der Kurbelwelle (3) jeweils drehfest verbunden sind, wobei
• die Zwischenwelle (8)
∘ von der Kurbelwelle (3) beabstandet ist, und
∘ durch ein oder mehrere Abtriebskettenräder (6a - 6e) verläuft, wobei das oder die Abtriebskettenräder (6a - 6e) mit der Zwischenwelle (8) jeweils drehfest verbunden sind,
• das Kettengetriebe (2) ein Kettenradpaar mit der Kette (5) aufweist, wobei zur Einstellung mehrerer verschiedener Übersetzungen des Kettengetriebes (2) mittels der Kette (5) ein oder eines von mehreren verschiedenen Antriebskettenrädern (4a - 4e) mit einem oder einem von mehreren verschiedenen Abtriebkettenrädern (6a - 6e) drehverbindbar ist, und
• die Kette (5) des Kettenradpaares mittels einer Umwerfereinrichtung (12) auf verschiedene Antriebskettenräder (4a - 4e) und/oder verschiedene Abtriebskettenräder (6a - 6e) umwerfbar ist
**dadurch gekennzeichnet, dass** die Antriebseinrichtung (1)
• ein Getriebeabtriebsrad (10) aufweist, das mit dem Kettengetriebe (2) zur Kraftübertragung verbunden ist, wobei
∘ die Kurbelwelle (3) durch das Innere des Getriebeabtriebsrades(10) verläuft,
∘ das Getriebeabtriebsrad (10) und die Kurbelwelle (3) gegeneinander verdrehbar angeordnet sind,
∘ das Getriebeabtriebsrad (10) mit einem oder mehreren Abtriebskettenrädern (6a - 6e) drehgekoppelt ist, und
∘ das Getriebeabtriebsrad (10) über eine Getriebestufe mit der Zwischenwelle (8) drehverbunden ist, wobei die Getriebestufe insbesondere ein im Eingriff befindliches Radpaar, insbesondere ein Reibradpaar oder ein Zahnradpaar (9a, 9b), nämlich insbesondere ein Stirnradpaar, oder ein Zugmittelgetriebe, insbesondere einen Kettentrieb oder einen Zahnriementrieb, umfassen kann.

2. Antriebseinrichtung (1) nach Anspruch 1, **dadurch gekennzeichnet, dass** die Antriebseinrichtung (1) ein Drehzahlreduziergetriebe (11) aufweist, das von dem Elektromotor (M) antreibbar ist, wobei ein Abtrieb des Drehzahlreduziergetriebes (11) über eine Freilaufkupplung (11b) mit der Kurbelwelle (3) verbunden ist.

3. Mit Motorkraft und/oder Pedalkraft betreibbares Fahrzeug (100) mit einer Kurbelwelle (3) für Tretkurbeln (102, 103), **dadurch gekennzeichnet, dass** das Fahrzeug (100) eine Antriebseinrichtung (1) nach einem der Ansprüche 1 oder 2 aufweist.

## Claims

1. Drive device (1) for a vehicle (1) which can be driven by motor power and/or pedal power and has a crankshaft (3) for pedal cranks (102, 103) and an intermediate shaft (8), in particular for an electric bicycle, comprising
• an electric motor (M),
• a chain gear mechanism (2) which is or can be connected respectively to the electric motor (M) and/or to the crankshaft (3) in order to transmit power and has an adjustable transmission ratio, wherein the chain gear mechanism (2) has a plurality of spaced apart chain wheels (4a-4e, 6a-6e) which can be rotationally connected to one another by means of a chain (5), wherein a force flux is conducted through the chain gear mechanism (2) for various transmission ratios via, in each case, another pair of chain wheels,
• the crankshaft (3) runs through one or more drive chain wheels (4a-4e) of the chain gear mechanism (2), wherein the drive chain wheel or wheels (4a-4e) is/are connected to the crankshaft (3) in each case in a rotationally fixed fashion, wherein
• the intermediate shaft (8)
∘ is spaced apart from the crankshaft (3), and
∘ runs through one or more output chain wheels (6a-6e),
wherein the output chain wheel or wheels (6a-6e) is/are connected to the intermediate shaft (8) in each case in a rotationally fixed fashion,
• the chain gear mechanism (2) has a pair of chain wheels with the chain (5),
wherein, in order to set a plurality of different transmission ratios of the chain gear mechanism (2) by means of the chain (5) one drive chain wheel, or one of a plurality of different drive chain wheels (4a-4e) can be rotationally connected to one or to one of a plurality of different output chain wheels (6a-6e),
and
• the chain (5) of the pair of chain wheels by means of a derailing device (12) can be derailed onto various drive chain wheels (4a-4e) and/or various output chain wheels (6a-6e), **characterized in that** the drive device (1)
• has a gear mechanism output wheel (10) which is connected to the chain gear mechanism (2) for transmitting force,
wherein
∘ the crankshaft (3) runs through the interior of the gear mechanism output wheel (10),
∘ the gear mechanism output wheel (10) and the crankshaft (3) are arranged so as to be rotatable with respect to one another,
∘ the gear mechanism output wheel (10) is rotationally coupled to one or more output chain wheels (6a-6e), and
∘ the gear mechanism output wheel (10) is rotationally connected to the intermediate shaft (8) by a gear stage, wherein the gear stage can comprise, in particular, a pair of wheels which are in engagement, in particular a pair of friction wheels or a pair of gear wheels (9a, 9b), specifically, in particular, a pair of spur gears or a traction drive, in particular a chain drive or a toothed belt drive.

2. Drive device (1) according to Claim 1, **characterized in that** the drive device (1) has a rotational speed reduction gear (11) which can be driven by the electric motor (M), wherein an output of the rotational speed reduction gear (11) is connected to the crankshaft (3) via a free wheel clutch (11b).

3. Vehicle (100) which can be driven with motor power and/or pedal power and has a crankshaft (3) for pedal cranks (102, 103) **characterized in that** the vehicle (1) has a drive device (1) according to one of Claims 1 or 2.

## Revendications

1. Dispositif d'entraînement (1) pour un véhicule (100) pouvant fonctionner avec une force de moteur et/ou une force de pédale, comprenant un vilebrequin (3) pour des manivelles de pédalier (102, 103) et un arbre intermédiaire (8), en particulier pour un vélo électrique, comprenant
- un moteur électrique (M),
- une transmission à chaîne (2) connectée ou pouvant être connectée à chaque fois au moteur électrique (M) et/ou au vilebrequin (3) en vue du transfert de force, avec une démultiplication ajustable, la transmission à chaîne (2) présentant plusieurs pignons espacés (4a - 4e, 6a - 6e), qui peuvent être reliés de manière rotative les uns aux autres au moyen d'une chaîne (5), un flux de forces étant guidé par la transmission à chaîne (2) pour différentes démultiplications, à chaque fois par le biais d'une autre paire de pignons,
- le vilebrequin (3) s'étendant à travers un ou plusieurs pignons d'entraînement (4a - 4e) de la transmission à chaîne (2), le ou les pignons d'entraînement (4a - 4e) étant à chaque fois reliés de manière solidaire en rotation au vilebrequin (3),
- l'arbre intermédiaire (8)
- étant espacé du vilebrequin (3), et
- s'étendant à travers un ou plusieurs pignons de sortie (6a - 6e), le ou les pignons de sortie (6a - 6e) étant à chaque fois reliés de manière solidaire en rotation à l'arbre intermédiaire (8),
- la transmission à chaîne (2) présentant une paire de pignons avec la chaîne (5), un ou l'un parmi plusieurs pignons d'entraînement différents (4a - 4e), pour l'ajustement de différentes démultiplications de la transmission à chaîne (2) au moyen de la chaîne (5), pouvant être relié en rotation à un ou l'un d'une pluralité de pignons de sortie différents (6a - 6e), et
- la chaîne (5) de la paire de pignons pouvant être transférée au moyen d'un dérailleur (12) sur différents pignons d'entraînement (4a - 4e) et/ou différents pignons de sortie (6a - 6e), **caractérisé en ce que** le dispositif d'entraînement (1)
- présente un plateau de sortie de transmission (10) qui est connecté à la transmission à chaîne (2) en vue du transfert de force,
- le vilebrequin (3) s'étendant à travers l'intérieur du plateau de sortie de transmission (10),
- le plateau de sortie de transmission (10) et le vilebrequin (3) étant disposés de manière à pouvoir tourner l'un par rapport à l'autre,
- le plateau de sortie de transmission (10) étant accouplé de manière rotative à un ou plusieurs pignons de sortie (6a - 6e), et
- le plateau de sortie de transmission (10) étant connecté de manière rotative par le biais d'un étage de transmission à l'arbre intermédiaire (8), l'étage de transmission pouvant comprendre notamment une paire de roues mutuelle en prise, notamment une paire de roues de friction ou une paire de roues dentées (9a, 9b), à savoir en particulier une paire de pignons droits, ou une transmission à moyen de traction, en particulier une transmission à chaîne ou une transmission à courroie dentée.

2. Dispositif d'entraînement (1) selon la revendication 1, **caractérisé en ce que** le dispositif d'entraînement (1) présente un réducteur de vitesse (11) qui peut être entraîné par le moteur électrique (M), une sortie du réducteur de vitesse (11) étant connectée par le biais d'un embrayage à roue libre (11b) au vilebrequin (3).

3. Véhicule (100) pouvant fonctionner avec une force de moteur et/ou une force de pédale, comprenant un vilebrequin (3) pour des manivelles de pédalier (102, 103), **caractérisé en ce que** le véhicule (100) présente un dispositif d'entraînement (1) selon l'une quelconque des revendications 1 ou 2.
